# EUROPEAN PATENT APPLICATION

(11) **EP 1 921 528 A2**
(43) Date of publication of application: **14.05.2008**
(21) Application number: 07120362.4
(22) Date of filing: 09.11.2007
(51) Int. Cl.: G05B 19/418

(54) **Event triggered data capture via embedded historians**

(30) Priority: 10.11.2006 US 558705
(71) Applicant: Rockwell Automation Technologies, Inc., Mayfield Heights, OH 44124 (US)
(72) Inventor: Campbell, John T., Bridgeville, OH 15017 (US); McGreevy, Robert J., Oswego, IL 60543 (US); Herbst, Robert J., Aurora, OH 44202 (US); Baier, John J., Mentor, OH 44060 (US); Jasper, Taryl J., South Euclid, OH 44121 (US)
(74) Representative: Englaender, Klaus

(57) **Abstract**

Systems and methods that automatically capture data/events related to industrial processes via a data capture unit. Such data capture unit includes an analysis component (which determines function blocks that define the control algorithm), and a triggering component (which initiates data capture for the function blocks based on such analysis.)

## Description

### TECHNICAL FIELD

The subject invention relates generally to historian components associated with industrial controllers and more particularly to data collection by embedded historian components, based on execution for various stages of functional blocks that form industrial processes.

### BACKGROUND

Manufacturers typically require collection, analysis, and optimization of real time data from a plurality of sites that are located globally. One common solution for recording such data includes providing a local recording module that often occupies a slot in a controller backplane such as a PC-Historian. A particular and common solution for recording data includes providing a local recording module that often occupies a slot in a controller backplane such as a PC-Historian which is an industrial computer for the controller backplane, and employs a transitional layer to supply an indirect interface to the controller. This includes a platform that provides high speed, time series, data storage and retrieval with both local and remote control processors. The PC-Historian communicates with controllers directly through the backplane and can communicate remotely via a network interface. The PC-Historian allows archiving data from the controller to an Archive Engine which provides additional storage capabilities.

Typically, such controllers are special-purpose computers utilized for controlling industrial processes, manufacturing equipment, and other factory automation, such as data collection or networked systems. At the core of the industrial control system, is a logic processor such as a Programmable Logic Controller (PLC) or PC-based controller. Programmable Logic Controllers for instance, are programmed by systems designers to operate manufacturing processes *via* user-designed logic programs or user programs. The user programs are stored in memory and generally executed by the PLC in a sequential manner although instruction jumping, looping and interrupt routines, for example, are also common. Associated with the user program are a plurality of memory elements or variables that provide dynamics to PLC operations and programs. Differences in PLCs are typically dependent on the number of Input/Output (I/O) they can process, amount of memory, number and type of instructions, and speed of the PLC central processing unit (CPU).

An industrial controller can be customized to a particular process by writing one or more control software routines that may be stored in the controller's memory and/or by changing the hardware configuration of the controller to match the control task or strategy. Such control routines may be generated using controller configurations systems or tools, which facilitate translation of a desired control strategy for the process into a control routine executable in a controller. For example, configuration tools can provide for graphical representations of control functions known as function blocks. A user models a control strategy by placing function blocks in a user interface work surface, and associating the function blocks using graphical connections known as wires, *via* a graphical user interface. Once the user has thus defined the desired control strategy, the configuration system compiles or verifies the graphical representation to produce a control routine, which may then be downloaded to one or more control modules in the control system. The control functions represented by the function blocks are implemented in the verified control routine according to execution ordering which may be determined in the compilation or verification process in the configuration tool.

Existing controller configuration tools allow a user to specify the execution ordering of the function blocks. For instance, the user can assign an order number to each function block using a control configuration system user interface. The compiled control routine will then perform the functionality underlying the function blocks in the assigned execution order.

Controllers and associated I/O modules can typically generate a significant amount of data relating to industrial processes. For example, controllers output status of sensors, drives, actuators, and the like. Furthermore, scheduling data can be output from the controller, which may be indicative of how a work order is proceeding through an industrial factory, whether additional work orders may be accepted, and the like. Moreover, events leading up to the alarm and other associated data can be generated and output by the controller. Typically, such approach assumes that users are already aware of what type of data should be collected, to address subsequent problems that may arise during the industrial process. Nonetheless, users may not necessarily know what data is important to collect for addressing future trouble-shooting.

### SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

The subject invention provides for systems and methods that automatically capture data/events by an embedded historian, which is operatively connected to a data capture unit that further includes an analysis component (which determines function blocks that define the control algorithm), and a triggering component (which initiates data capture for the function blocks based on such analysis.) Accordingly, an improved data flow in control system routine execution/data collection can be supplied, which enables data collection based on execution for various stages of the function blocks, and requirements thereof. In general, such embedded historians (unlike conventional PC historians) supply a direct interface to controllers without employing a transitional layer, and hence provide a substantially higher data exchange rate as compared to conventional PC historians.

In a related aspect, data collection can automatically start at onset of activities relating to a function block by the triggering component, and based on determinations of the analysis component. Likewise, data collection automatically stops upon completion of the function block. Accordingly, relevant data to various performance stages can automatically be gathered.

In a related methodology, automatic function block execution ordering and data collection can take into account feedback loops in the function block, which can affect data collection (*e.g*., frequency of data collection, granularity, and the like.) Such feedback loops can be detected by the existence of a feedback loop indicia in the function block diagram, such as a localized feedback wire associated with a function block input in the feedback loop. Moreover, generation of an execution order can be accomplished for the function block diagram *via* assigning an execution number to each of the function blocks in the function block diagram. For instance, where the function block diagram includes an association between an input of a first function block and an output of a second function block, the method can determine that data is available for the input of the first function block if an execution order number has been assigned to the second function block. Data capture for the function blocks can be triggered based on such sequencing.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

Fig. 1 is a schematic block diagram of a system that determines function blocks activities for a control algorithm, to facilitate data collection by embedded historians in accordance with an aspect of the subject innovation.

Fig. 2 illustrates a block diagram for a data capture unit associated with an embedded historian in accordance with an aspect of the subject invention.

Fig. 3 illustrates a system that can accept user input regarding type of data collection that relates to a function block.

Fig. 4 illustrates an exemplary methodology of function block analysis and event driven data collection for an embedded historian in accordance with an aspect of the subject innovation.

Fig. 5 illustrates a particular methodology of function block analysis and event triggered data collection via embedded historians, in accordance with an aspect of the subject innovation.

Fig. 6 illustrates an exemplary industrial automation network that employs a data capture unit to facilitate capture of data via embedded historians, in accordance with an aspect of the subject innovation.

Fig. 7 illustrates a data capture unit as part of an industrial setting in accordance with an aspect of the subject innovation.

Fig. 8 illustrates an exemplary multi-tiered and distributed embedded historian system, which can employ a data capture unit in accordance with an aspect of the subj ect innovation.

Fig. 9 illustrates an exemplary computing environment that can be implemented as part of a data capture unit in accordance with an aspect of the subject innovation.

Fig. 10 illustrates an industrial setting with a backplane and associated modules that can employ data capture unit in accordance with an aspect of the subject innovation.

### DETAILED DESCRIPTION

The various aspects of the subject innovation are now described with reference to the annexed drawings, wherein like numerals refer to like or corresponding elements throughout. It should be understood, however, that the drawings and detailed description relating thereto are not intended to limit the claimed subject matter to the particular form disclosed. Rather, the intention is to cover all modifications, equivalents and alternatives falling within the spirit and scope of the claimed subject matter.

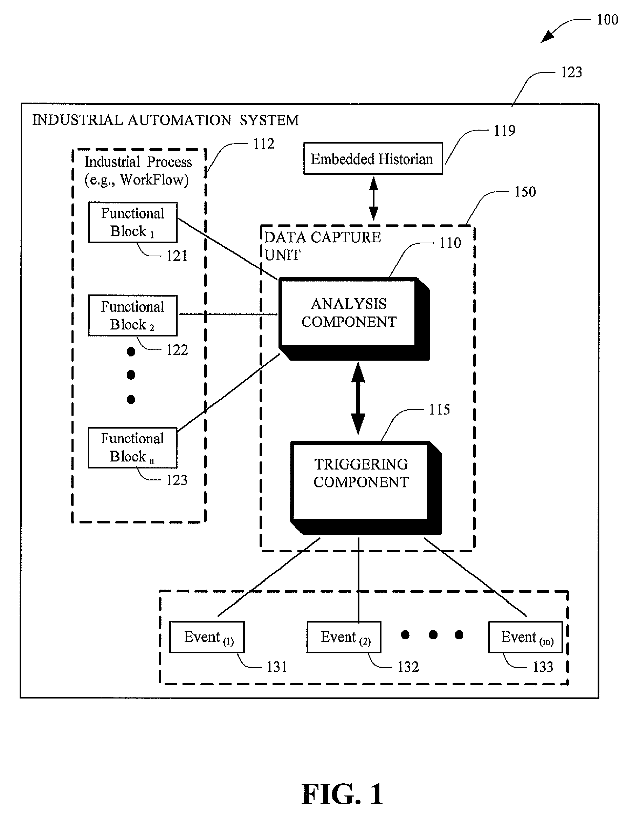

Fig. 1 illustrates an industrial system 100 component that can facilitate automatically capturing data/events related to industrial processes, by an embedded historian(s) 119. In general, such embedded historians 119 (unlike conventional PC historians) supply a direct interface to controllers without employing a transitional layer, and hence provide a substantially higher data exchange rate as compared to conventional PC historians. The system 100 employs a data capture unit 150, which further includes an analysis component 110 that determines function blocks 121, 122, 123 (1 to n, n is an integer) of an industrial process 112. The execution order for each of such function blocks 121,122, 123 can depend upon availability of respective input data. For example, determination of available input data can include determining sources for the data associated with the inputs to each function block in the function block diagram, determining whether the input data source is an input reference (*e.g*., data obtained from a controlled process or machine), determining whether the input source is part of a feedback loop, and the like.

The function blocks 121, 122, and 123 can thus be evaluated one at a time by the analysis component 110 - *e.g*., such evaluation can include locating an input source that can depend upon an input reference (*e.g*., data availability). The identified function block 121, 122, 123 can subsequently be assigned a next available execution order number as part of an execution order generation, wherein the process 112 can continue until order numbers have been assigned for each such function block 121,122, and 123.

The analysis component 110 can further supply iterative evaluation of one or more function blocks 121, 122, and 123. For example, a function block can be selected based on a predetermined criteria (*e.g*., data availability for input to the function block). Hence, the analysis component can identify the function blocks 121, 122, and 123 followed by an execution order that can be based on data availability (*e.g*., regardless of which function block is evaluated first.)

The data capture unit 150 further includes a triggering component 115, which initiates data capture related to execution of functional blocks within the industrial automation system 123. Such data capture can occur in response to a triggering event 131, 132, and 133 (1 to m, m being an integer) - for example events such as; receiving a message to execute a particular functional block, locating data input for a functional block, executing a predetermined order for the functional block, and the like. In a related aspect, data collection can automatically start at onset of activities relating to a function block by the triggering component 115, and based on determinations of the analysis component 110. Likewise, data collection automatically stops upon completion of the function block. Accordingly, relevant data to various performance stages can be automatically be gathered, even though users (*e.g.,* unit operators, plant engineers) may not necessarily know what data is important to collect for addressing future trouble-shooting.

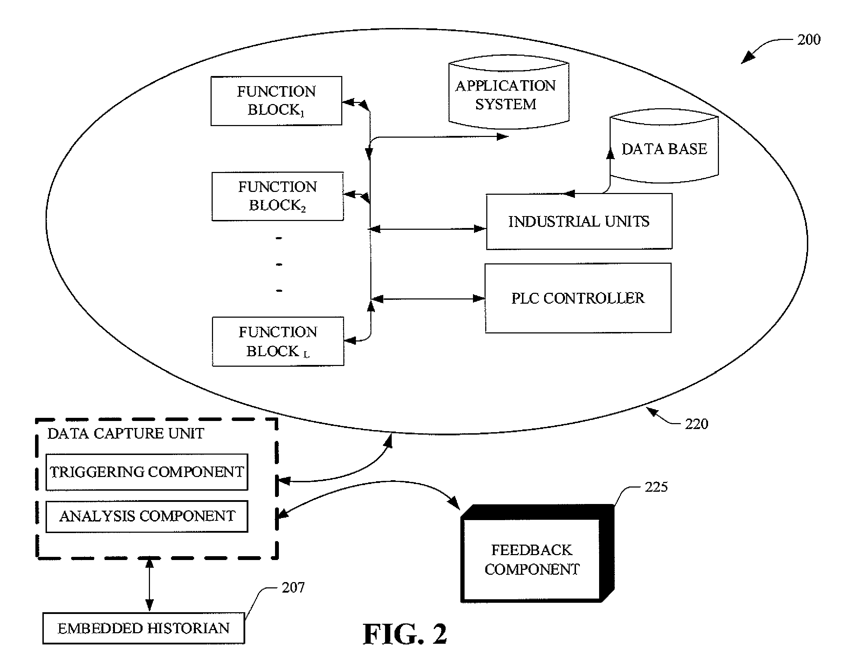

Fig. 2 illustrates an industrial system 200 that further includes a feed back component 225 that take into account feedback loops and other recursive data dependency characteristics among the plurality of function blocks. The feedback component 225 can also supply feedback of users of the system 200 regarding feasibility and/or efficiency of data collection *via* the embedded historian 207 associated with the data capture system 200. Accordingly, type of data that is to be collected can be dynamically updated for each stage of execution for the process, and further provide for deterministic evaluation of data dependencies in generating a function block execution order. For example, automatic function block execution ordering and data collection can take into account feedback loops in the function block, which can affect data collection (*e.g*., frequency of data collection, granularity, and the like.) Moreover, such feedback loops can be detected by the existence of a feedback loop indicia in the function block diagram, such as a localized feedback wire associated with a function block input in the feedback loop.

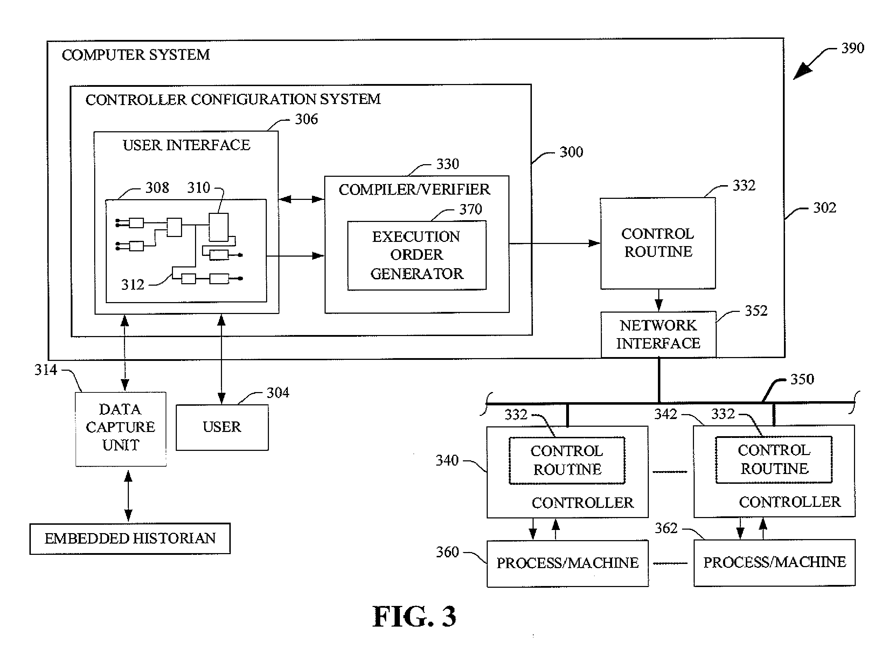

Fig. 3 illustrates a system 390 that can accept user input regarding type of data collection that relates to a function block 308. Such data collection can be associated with a controller configuration system 300 that can define process execution *via* the function block 308. The controller configuration system can be implemented in software, hardware, and/or combinations thereof, in a computer system 302. A user 304 can interact with the system 300 *via* an interface 306 (*e.g*., a graphical user interface), to generate or modify a function block diagram 308 (*e.g*., or a graphical representation thereof). In addition to the data capture unit 314 that can automatically interact with the functional block 308, the user can also locate and interconnects the desired function blocks 310 to create a graphical representation of a desired control strategy to be implemented in a control system.

The controller configuration system 300 further comprises a compiler or verifier component 330 for generating a compiled or verified control routine or program 332 according to the function block diagram 308. The control routine 332 is then downloaded to controllers 340, 342, *via* a network 350 and a network interface 352 in the computer system 302, wherein such control routine 332 is executed in the controller or controllers 340, 342 for controlling the operation of controlled processes or machines 360, 362, respectively.

In addition, the controller configuration system 300 can also include an execution order generator 370, which is operative to determine input data availability for the blocks in the diagram 308, and to generate an associated execution order according to the input data availability. Such execution order generation can be accomplished *via* the generator, as part of the compiler component 330, or separate therefrom. Accordingly, execution order generator 370 and the controller configuration system 300 can provide for automatic function block execution order generation according to data availability, whereby an improved data flow in control system routine execution/data collection can be supplied, which further enables data collection based on execution for various stages of the function blocks, and requirements thereof.

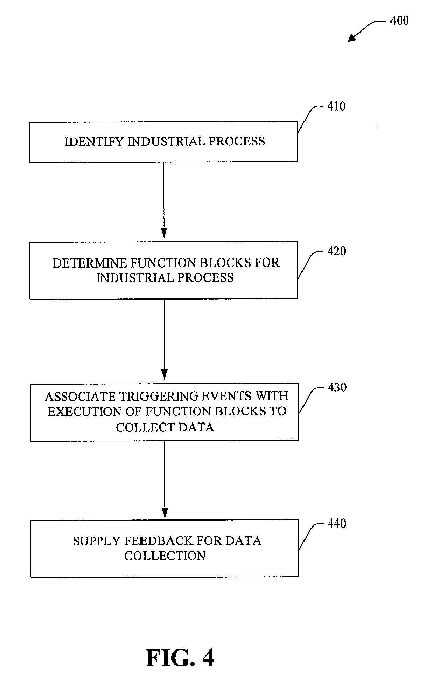

Fig. 4 illustrates a methodology 400 of function block analysis and event driven data collection in accordance with an aspect of the subject innovation. While the exemplary method is illustrated and described herein as a series of blocks representative of various events and/or acts, the present invention is not limited by the illustrated ordering of such blocks. For instance, some acts or events may occur in different orders and/or concurrently with other acts or events, apart from the ordering illustrated herein, in accordance with the invention. In addition, not all illustrated blocks, events or acts, may be required to implement a methodology in accordance with the present invention. Moreover, it will be appreciated that the exemplary method and other methods according to the invention may be implemented in association with the method illustrated and described herein, as well as in association with other systems and apparatus not illustrated or described. Initially, and at 410 an industrial process can be identified for performance within an industrial plant. Next, and at 420 various function blocks that are associated with and/or form such industrial process can be determined *via* an analysis component as described in detail *supra.* A plurality of triggering events can subsequently be defined at 430 that correspond to execution of functional blocks, and to indicate execution thereof and for collection of data related thereto. For instance, where the function block diagram includes an association between an input of a first function block and an output of a second function block, the triggering event can be based on an execution order of execution. Date collection can subsequently initiate with feed back provided for such data (*e.g*., efficiency of such data collection for subsequent trouble shooting), wherein type of data that is to be collected can be dynamically updated for each stage of execution for the process, at 440.

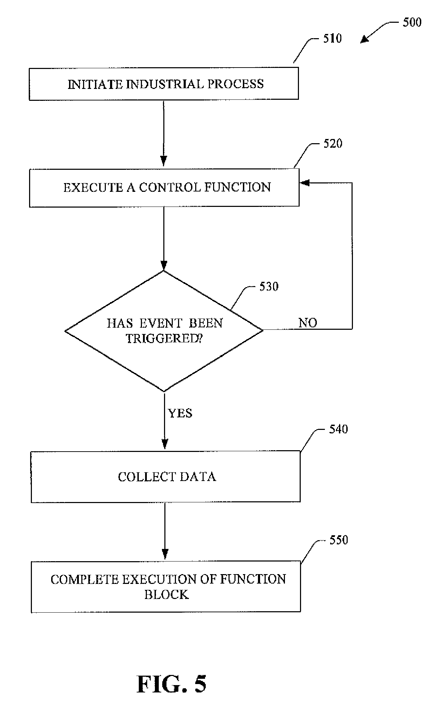

Fig. 5 illustrates a related methodology 500 of function block analysis and event triggered data collection in accordance with a further aspect of the subject innovation. Initially and at 510 an industrial process that requires data collection is (*e.g.,* for future trouble shooting) is initiated within an industrial plant. Next and at 520, a control function (*e*.*g*., a function block) associated with such industrial process is executed, a part of the industrial process. At 530 a determination is made as to whether an event that is associated with such control function - *via* the triggering component as described in detail *supra -* is being triggered. If so, the methodology proceeds to data collection at 540, followed by completing an execution of the functional block at 550. Otherwise, and if no event has been triggered the methodology 500 returns to act 520 for executing another control function of the industrial process.

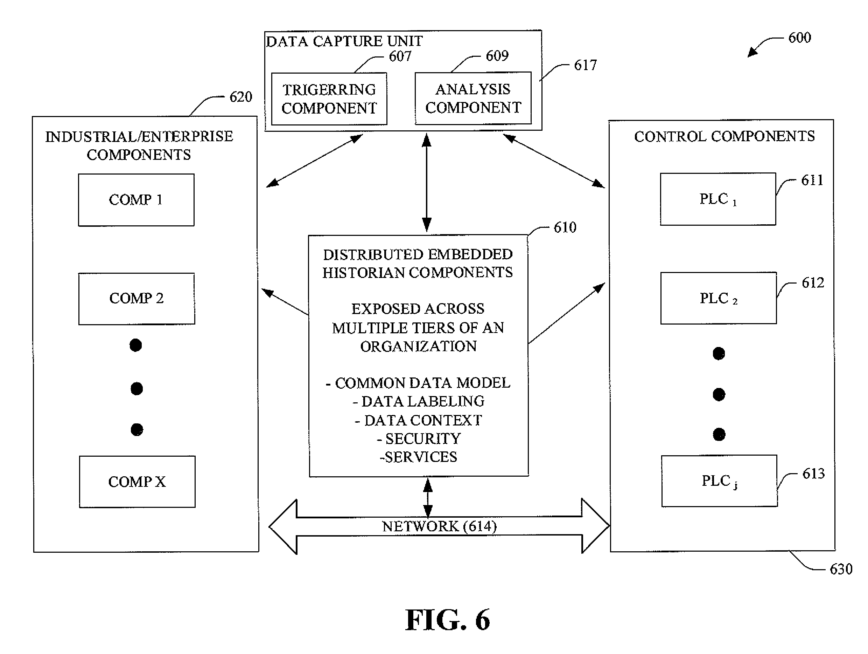

Fig. 6 illustrates a block diagram of a data capture unit 617 that employs an analysis component 609 (which analyzes functional blocks for control algorithm of the control component 630) and a triggering component 607 (which initiates data capture for such function blocks). The data capture unit 617 can capture data *via* a plurality of distributed embedded historian components 610. For example, the data capture unit 617 can automatically initiate data collection at onset of activities relating to a function block (*e.g*. determination of function block by the analysis component 609, and initiation of data collection by the triggering component 607). Likewise, data collection automatically stops upon completion of the function block, and hence, relevant data to various performance stages can automatically be gathered, and stored for future trouble shooting *via* the distributed embedded historian components 610.)

Functional blocks for control algorithm can be part of applications running with/ or on the control components 611,612, 613 (1 to j, j being an integer) which can function as a management control center for the industrial network system 600. Accordingly, a distributed embedded historian framework is provided, wherein historical data types can be collected based on triggering events, which are set by the triggering component 607 (*e.g*., in accordance with an analysis of function blocks) - such that collected data can address subsequent problems that may arise during the industrial process.)

A network system 614 can be associated with the industrial automation system 600. The network system 614 can further include additional hosts (not shown), which may be personal computers, servers or other types of computers. Such hosts generally can be capable of running or executing one or more application-level (or user-level) programs, as well as initiating an I/O request (*e.g*., IIO reads or writes). In addition, the network system can further include one or more input/output units (I/O units), wherein such I/O units can includes one or more I/O controllers connected thereto, and each of the I/O can be any of several types of I/O devices, such as storage devices (*e*.*g*., a hard disk drive, tape drive) or other I/O device. The hosts and I/O units and their attached I/O controllers and devices can be organized into groups such as clusters, with each cluster including one or more hosts and typically one or more I/O units (each I/O unit including one or more I/O controllers). The hosts and I/O units can be interconnected *via* a collection of routers, switches and communication links (such as wires, connectors, cables, and the like) that connects a set of nodes (*e.g*., connects a set of hosts and I/O units) of one or more clusters.

It is noted that as used in this application, terms such as "component," "hierarchy," "model, " and the like are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components can reside within a process and/or thread of execution and a component may be localized on one computer and/or distributed between two or more computers, industrial controllers, and/or modules communicating therewith.

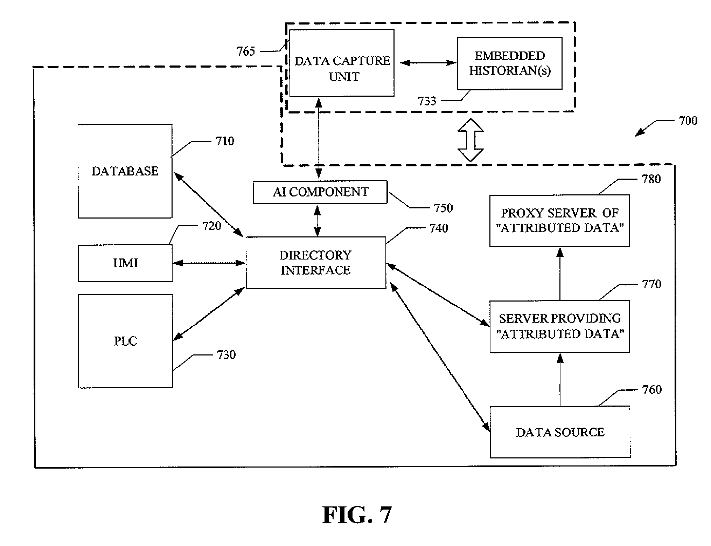

Fig. 7 illustrates an exemplary industrial automation network that employs a data capture unit 765 that configures embedded historian component 733. Such data capture unit 765 can determine function blocks that define a control algorithm, and further initiate data capture for the function blocks based on such analysis. The industrial setting 700 can include a database 710, a human machine interface (HMI) 720 and a programmable logic controller (PLC) 730, and a directory interface 740. The data capture unit 765 can further associate with an Artificial Intelligence (AI) component 750 to facilitate determination of functional blocks, and initiation of triggering events.

For example, in connection with analyzing function blocks associated with a control algorithm and/or initiating of data capture, the subject invention can employ various artificial intelligence schemes. A process for learning explicitly or implicitly whether data from embedded historian should be downloaded, can be facilitated *via* an automatic classification system and process. Classification can employ a probabilistic and/or statistical-based analysis (*e.g*., factoring into the analysis utilities and costs) to prognose or infer an action that a user desires to be automatically performed. For example, a support vector machine (SVM) classifier can be employed. Other classification approaches include Bayesian networks, decision trees, and probabilistic classification models providing different patterns of independence can be employed. Classification as used herein also is inclusive of statistical regression that is utilized to develop models of priority.

As will be readily appreciated from the subject specification, the subject invention can employ classifiers that are explicitly trained (*e.g., via* a generic training data) as well as implicitly trained (*e.g*., *via* observing user behavior, receiving extrinsic information) so that the classifier is used to automatically determine according to a predetermined criteria which answer to return to a question. For example, with respect to SVM's that are well understood, SVM's are configured *via* a learning or training phase within a classifier constructor and feature selection module. A classifier is a function that maps an input attribute vector, x = (x1, x2, x3, x4, *xn*)*,* to a confidence that the input belongs to a class - that is, f(x) *= confidence*(*class*)*.* As shown in Fig. 7, an artificial intelligence (AI) component 750 can be employed to facilitate inferring and/or determining when, where, how to initiate a download from the plurality of embedded historians to the central plant historian. The AI component 750 can employ any of a variety of suitable AI-based schemes as described *supra* in connection with facilitating various aspects of the subject invention.

In addition, the directory interface 740 can be employed to provide data from an appropriate location such as the data source 760, a server 770 and/or a proxy server 780. Accordingly, the directory interface 740 can point to a source of data based upon role and requirements (needs) of a requester (*e.g*., database 710, HMI 720, PLC 530, and the like.) The database 710 can be any number of various types such as a relational, network, flat-file or hierarchical systems. Typically, such databases can be employed in connection with various enterprise resource planning (ERP) applications that can service any number of various business related processes within a company. For example, ERP applications can be related to human resources, budgeting, forecasting, purchasing and the like. In this regard, particular ERP applications may require data that has certain desired attributes associated therewith. Thus, in accordance with an aspect of the subject invention, the directory interface 740 can provide data to the database 710 from the server 770, which provides data with the attributes desired by the database 710.

Moreover, the HMI 720 can employ the directory interface 740 to point to data located within the system 700. The HMI 720 can be employed to graphically display various aspects of a process, system, factory, *etc,* to provide a simplistic and/or user-friendly view of the system. Accordingly, various data points within a system can be displayed as graphical (*e.g*., bitmaps, jpegs, vector based graphics, clip art and the like) representations with desired color schemes, animation, and layout.

The HMI 720 can request data to have particular visualization attributes associated with data in order to easily display such data thereto. For example, the HMI 720 can query the directory interface 740 for a particular data point that has associated visualization attributes. The directory interface 740 can determine the proxy server 780 contains the attributed data point with the desired visualization attributes. For instance, the attributed data point can have a particular graphic that is either referenced or sent along with the data such that this graphic appears within the HMI environment instead of or along with the data value.

As explained earlier, the PLC 730 can be any number of models such as Allen Bradley PLC5, SLC-500, MicoLogix, and the like. The PLC 730 is generally defined as a specialized device employed to provide high-speed, low-level control of a process and/or system. The PLC 730 can be programmed using ladder logic or some form of structured language. Typically, the PLC 730 can utilize data directly from a data source (*e*.*g*., data source 760) that can be a sensor, encoder, measurement sensor, switch, valve and the like. The data source 760 can provide data to a register in a PLC and such data can be stored in the PLC if desired. Additionally, data can be updated (*e.g.,* based on a clock cycle) and/or output to other devices for further processing.

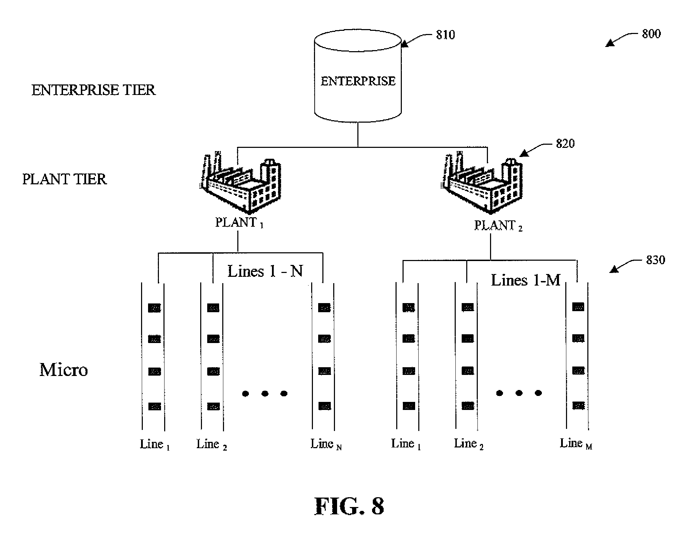

Fig. 8 illustrates an exemplary multi-tiered and distributed historian system 800, which can employ a data capture system in accordance with an aspect of the subject innovation. The exemplary system 800 illustrates three tiered historian level, wherein the highest data collection tier is illustrated and can be referred to as the enterprise tier 810. This tier aggregates data collected from lower level tiers such as from a plant tier 820 and a micro or embedded tier 830. As illustrated, the tiers 810 and 820 can include archival or permanent storage capabilities. In the system 800, data can be collected from two plants at the tier 820, and from a plurality of historian components at tier 830. It is to be appreciated that such an arrangement is exemplary in nature, and other arrangements are well within the realm of the subject innovation.

Typically, the system 800 can be viewed as a Distributed Historian that spans machines, plants, and enterprises. At level 830, the historian collects data at the rack level and is coupled to Common Plant Data Structure described above. Such can include collecting process & discrete data, alarms & events in a single archive if desired. Other aspects can include auto-discovery of data and context from controllers in local chassis including store/forward data capabilities from local buffers. Data can be collected without polling, having a low communications bandwidth. The plant level 820 aggregates data from Micro or rack-embedded Historians and/or other data sources (*e.g*., Live Data source). Such can include plant-level querying, analytics, reporting while efficiently storing, retrieving, and managing large amounts of data. This level can also auto-discover data and data model context from Micro Historians located at level 830. Other features of the system 800 can include analysis components, logical units, components for interaction with report elements, embeddable presentation components, replication of configuration, storage, archiving, data compression, summarization/filtering, security, and scalability.

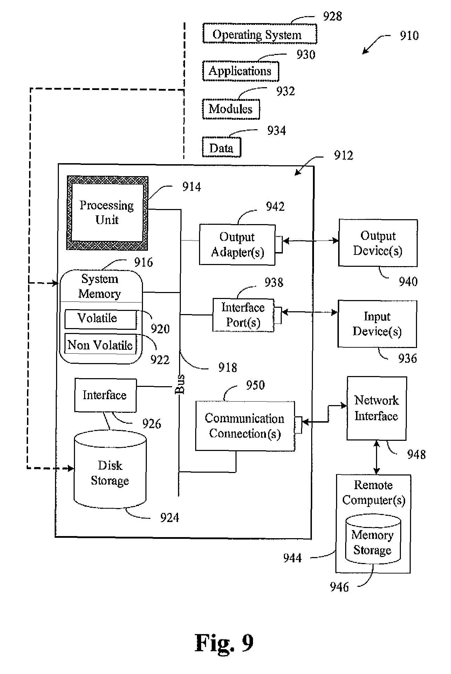

Fig. 9 illustrates an exemplary environment 910 for implementing various aspects of the data capture unit, which can include computer 912, as part of the configuration component. The computer 912 includes a processing unit 914, a system memory 916, and a system bus 918. The system bus 918 couples system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, 9-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable ROM (EEPROM), or flash memory. Volatile memory 920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM) .

Computer 912 also includes removable/non-removable, volatile/non-volatile computer storage media. Fig. 9 illustrates, for example a disk storage 924. Disk storage 924 includes, but is not limited to, devices like a magnetic disk drive, floppy disk drive, tape drive, Jaz drive, Zip drive, LS-60 drive, flash memory card, or memory stick. In addition, disk storage 924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used such as interface 926.

It is to be appreciated that Fig. 9 describes software that acts as an intermediary between users and the basic computer resources described in suitable operating environment 910. Such software includes an operating system 928, Operating system 928, which can be stored on disk storage 924, acts to control and allocate resources of the computer system 912. System applications 930 take advantage of the management of resources by operating system 928 through program modules 932 and program data 934 stored either in system memory 916 or on disk storage 924. It is to be appreciated that various components described herein can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 *via* interface port(s) 938. Interface port(s) 938 include, for example, a serial port, a parallel port, a game port, and a universal serial bus (USB). Output device(s) 940 use some of the same type of ports as input device(s) 936. Thus, for example, a USB port may be used to provide input to computer 912, and to output information from computer 912 to an output device 940. Output adapter 942 is provided to illustrate that there are some output devices 940 like monitors, speakers, and printers, among other output devices 940 that require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected *via* communication connection 950. Network interface 948 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

As used herein, the terms "component," "system" and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on computer and the computer can be a component. One or more components may reside within a process and/or thread of execution and a component may be localized on one computer and/or distributed between two or more computers. The word "exemplary" is used herein to mean serving as an example, instance, or illustration. Any aspect or design described herein as "exemplary" is not necessarily to be construed as preferred or advantageous over other aspects or designs.

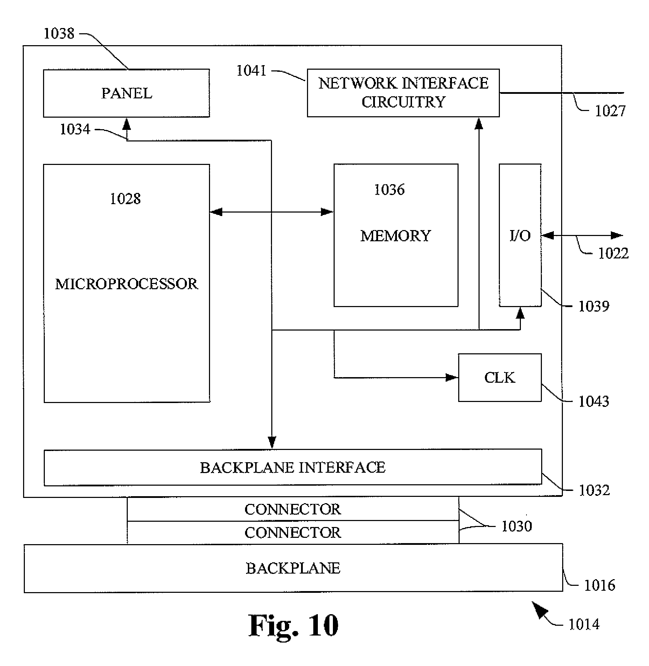

Fig. 10 also illustrates an exemplary environment that can employ a data capture unit in accordance with various aspects of the subject innovation. Each functional module 1014 is attached to the backplane 1016 by means of a separable electrical connector 1030 that permits the removal of the module 1014 from the backplane 1016 so that it may be replaced or repaired without disturbing the other modules 1014. The backplane 1016 provides the module 1014 with both power and a communication channel to the other modules 1014. Local communication with the other modules 1014 through the backplane 1016 is accomplished by means of a backplane interface 1032 which electrically connects the backplane 1016 through connector 1030. The backplane interface 1032 monitors messages on the backplane 1016 to identify those messages intended for the particular module 1014, based on a message address being part of the message and indicating the message destination. Messages received by the backplane interface 1032 are conveyed to an internal bus 1034 in the module 1014.

The internal bus 1034 joins the backplane interface 1032 with a memory 1036, a microprocessor 1028, front panel circuitry 1038, I/O interface circuitry 1039 and communication network interface circuitry 1041. The microprocessor 1028 can be a general purpose microprocessor providing for the sequential execution of instructions included within the memory 1036 and the reading and writing of data to and from the memory 1036 and the other devices associated with the internal bus 1034. The microprocessor 1028 includes an internal clock circuit (not shown) providing the timing of the microprocessor 1028 but may also communicate with an external clock 1043 of improved precision. This clock 1043 may be a crystal controlled oscillator or other time standard including a radio link to an external time standard. The precision of the clock 1043 may be recorded in the memory 1036 as a quality factor. The panel circuitry 1038 includes status indication lights such as are well known in the art and manually operable switches such as for locking the module 1014 in the off state.

The memory 1036 can comprise control programs or routines executed by the microprocessor 1028 to provide control functions, as well as variables and data necessary for the execution of those programs or routines. For I/O modules, the memory 1036 may also include an I/O table holding the current state of inputs and outputs received from and transmitted to the industrial controller 1010 *via* the I/O modules 1020. The module 1014 can be adapted to perform the various methodologies of the innovation, *via* hardware configuration techniques and/or by software programming techniques.

What has been described above includes various exemplary aspects. It is, of course, not possible to describe every conceivable combination of components or methodologies for purposes of describing these aspects, but one of ordinary skill in the art may recognize that many further combinations and permutations are possible. In particular regard to the various functions performed by the above described components (assemblies, devices, circuits, systems, etc.), the terms (including a reference to a "means") used to describe such components are intended to correspond, unless otherwise indicated, to any component which performs the specified function of the described component (*e.g*., that is functionally equivalent), even though not structurally equivalent to the disclosed structure, which performs the function in the herein illustrated exemplary aspects of the innovation. In this regard, it will also be recognized that the innovation includes a system as well as a computer-readable medium having computer-executable instructions for performing the acts and/or events of the various methods of the innovation. Furthermore, to the extent that the term "includes" is used in either the detailed description or the claims, such term is intended to be inclusive in a manner similar to the term "comprising" as "comprising" is interpreted when employed as a transitional word in a claim.

In summary the invention provides systems and methods that automatically capture data/events related to industrial processes *via* a data capture unit. Such data capture unit includes an analysis component (which determines function blocks that define the control algorithm), and a triggering component (which initiates data capture for the function blocks based on such analysis.)

## Claims

**1.** An industrial automation system, comprising:
a data capture unit that includes an analysis component to determine functional blocks that define a control algorithm,
an embedded historian operatively connected to the data capture unit, to collect data based on execution of various stages of the functional blocks.

**2.** The industrial automation system of claim 1 further comprising a triggering component that initiates data capture for the functional blocks.

**3.** The industrial automation system of claim 1 or 2 further comprising a feedback loop in the functional block, to affect collection of data by the embedded historian.

**4.** The industrial automation system of claim 3 further comprising a feedback component to supply feasibility of data collection.

**5.** The industrial automation system of claim 3 or 4 further comprising a controller configuration system to define process execution *via* the functional blocks.

**6.** The industrial automation system of claim 5 further comprising a graphical user interface that accepts modifications to the functional blocks *via* user input,

**7.** The industrial automation system of claim 5 or 6, the controller configuration system further comprising a compiler component that generates a compiled control routine.

**8.** The industrial automation system of claim 5, 6 or 7 the controller configuration system further comprising an execution order generator that determines data availability for the functional blocks.

**9.** The industrial automation system of one of claims 1 to 8 further comprising an organizational hierarchy data model with nodes that represent units associated with the industrial automation system.

**10.** The industrial automation system of one of claims 1 to 9 further comprising an artificial intelligence component that facilitates analysis of the functional blocks.

**11.** The industrial automation system of one of claims 1 to 10 further comprising a Human Machine Interface (HMI) to graphically display a view of the industrial automation system.

**12.** The industrial automation system of one of claims 1 to 11, the embedded historian component associated with at least one of a controller, a module in a chassis, a server, a sensor, and a factory component.

**13.** A method of data capture *via* embedded historians within an industrial plant comprising:
determining functional blocks that form an industrial process; and
collecting data *via* the embedded historian based on execution of the functional blocks.

**14.** The method of claim 13 further comprising defining triggering events that signify execution of the functional block.

**15.** The method of claim 13 or 14 further comprising collecting data by the embedded historian upon initiation of the triggering events.

**16.** The method of claim 13, 14 or 15 further comprising executing the functional block.

**17.** The method of one of claims I to 16 further comprising initiating data collection at onset of activities relating to the functional blocks.

**18.** The method of one of claims 13 to 18 further comprising employing the gathered data for future trouble shooting.

**19.** The method of claim 13 further comprising employing a directory to track source of data.

**20.** A computer implemented system comprising the following computer executable components:
an analysis component that determines functional blocks to define a control algorithm, and
a triggering component that initiates data capture for the functional block.

**21.** The computer implemented system of claim 20 further comprising an embedded historian component that collects the data based on triggering events.

**22.** The computer implemented system of claim 20 or 21 further comprising a data base that services the embedded historians.

**23.** The computer implemented system of claim 20, 21 or 22 the functional blocks for control algorithm are part of applications running on a control component.

**24.** The computer implemented system of one of claims 20 to 23 further comprising a feedback loop component, to affect collection of data by the embedded historian,

**25.** The computer implemented system of one of claims 20 to 24 further comprising a feedback loop component, to affect collection of data by the embedded historian.

**27.** An industrial controller system comprising:
collection means for collecting data related to an industrial process; and
means for determining functional blocks that form the industrial process.

**28.** The industrial controller system of claim 27 further comprising means for triggering collection of data.

**29.** The industrial controller system of claim 27 or 28 further comprising means for modifying the functional blocks by a user.

**30.** The industrial controller system of claim 27, 28 or 29 further comprising means for representing units associated with the industrial plant as nodes.
